# EUROPÄISCHE PATENTANMELDUNG

(11) **EP 1 792 745 A2**
(43) Veröffentlichungstag der Anmeldung: **06.06.2007**
(21) Anmeldenummer: 06023107.3
(22) Anmeldetag: 07.11.2006
(51) Int. Cl.: B44C 1/22, B44C 5/04, G09F 7/16, G09F 21/04

(54) **Dekorationsgegenstand aus Metall mit einem durch Laserschneiden gebildeten dekorativen Muster**

(30) Priorität: 25.11.2005 DE 202005018561 U
(71) Anmelder: Kallemeier, Frank, 33104 Paderborn (DE)
(72) Erfinder: Kallemeier, Frank, 33104 Paderborn (DE)
(74) Vertreter: Ostermann, Thomas

(57) **Zusammenfassung**

Dekorationsgegenstand aus einem Metallmaterial, der über eine Mehrzahl von Ausnehmungen verfügt zur Bildung eines Dekorationsmusters, wobei der Dekorationsgegenstand mindestens einen Zuschnitt aufweist, das Dekorationsmuster durch Laserschneiden in dem Zuschnitt gebildet ist und der Zuschnitt mit weiteren Zuschnitten und/oder weiteren Bauteilen zur Bildung des Dekorationsgegenstandes fest verbunden ist.

## Beschreibung

Die Erfindung betrifft einen Dekorationsgegenstand aus einem Metallmaterial, der über eine Mehrzahl von Ausnehmungen verfügt zur Bildung eines Dekorationsmusters.

Aus der EP 1 188 575 B1 ist ein Dekorationsgegenstand aus einem Metallmaterial bekannt, der eine Mehrzahl von Ausnehmungen aufweist zur Erzeugung eines Dekorationsmusters. Die Erzeugung des Dekorationsmusters ist relativ aufwändig und kompliziert, da eine Farbsublimationsübertragungsdrucktechnik eingesetzt wird.

Aus der DE 41 28 194 C2 ist es bereits bekannt, zur Erzeugung einer Umrisskontur von Blechteilen eine Laserschneidvorrichtung einzusetzen. Das bekannte Laserschneiden bezieht sich jedoch lediglich auf das Trennen von Blechteilen.

Aufgabe der vorliegenden Erfindung ist es, einen Dekorationsgegenstand aus einem Metallmaterial derart weiterzubilden, dass die Erstellung von Dekorationsmustern einfach und kostengünstig gewährleistet ist.

Zur Lösung dieser Aufgabe ist die Erfindung in Verbindung mit dem Oberbegriff des Patentanspruchs 1 dadurch gekennzeichnet, dass der Dekorationsgegenstand mindestens einen Zuschnitt aufweist, dass das Dekorationsmuster durch Laserschneiden in dem Zuschnitt gebildet ist und dass der Zuschnitt mit weiteren Zuschnitten und/oder weiteren Bauteilen zur Bildung des Dekorationsgegenstandes fest verbunden ist.

Der besondere Vorteil der Erfindung besteht darin, dass Teile eines Dekorationsgegenstandes derart bereitgestellt werden, dass sie mittels Laserschneiden zur Herstellung eines Dekorationsmusters geeignet sind. Nach der Erfindung wird der Dekorationsgegenstand in mehrere einstückige Zuschnitte aufgeteilt, die jeweils mit einem Dekorationsmuster versehen werden. Auf einfache Weise kann dann der mit dem Dekorationsmuster versehene Zuschnitt mit weiteren Zuschnitten bzw. Bauteilen zu dem Dekorationsgegenstand verbunden werden. Grundgedanke der Erfindung ist es, kleinere Einheiten eines Dekorationsgegenstandes vorzusehen, so dass diese auf herstellungstechnisch einfache Weise bearbeitet werden können zur Erstellung eines komplexen oder filigranen Dekorationsmusters. In einem weiteren Herstellungsschritt erfolgt erst die Zusammensetzung zu dem gewünschten Dekorationsgegenstand.

Nach einer Weiterbildung der Erfindung wird das Dekorationsmuster durch eine Mehrzahl von zweidimensionalen Ausschnitten gebildet, die vorzugsweise auf einem zweidimensionalen Zuschnitt appliziert sind. Dadurch, dass die Ausschnitte Krümmungen unterschiedlicher Radien aufweisen können, ergibt sich ein gravurähnliches optisch ansprechendes Erscheinungsbild des Dekorationsmusters.

Nach einer Weiterbildung der Erfindung kann der Dekorationsgegenstand als ein Gitterzaun ausgebildet sein, wobei ein Ausschnitt von benachbart angeordneten Gittersegmenten durch ein mit einem Dekorationsmuster versehener Zuschnitt ausgefüllt ist. Der Zuschnitt ist durch Schweißen mit den angrenzenden Gitterstäben verbunden, wobei durch die Mehrzahl von Schweißpunkten eine feste Verbindung zu den Gitterstäben gegeben ist. Auf diese Weise kann durch einfache Weise dem Gitterzaun ein ansprechendes gestalterisches Gepräge verliehen werden.

Nach einer Weiterbildung der Erfindung ist der Dekorationsgegenstand als ein Blumentopf ausgebildet, der über mehrere aufrechte Wände verfügt. Mindestens eine aufrechte Wand ist als mit einem Dekorationsmuster versehener Zuschnitt ausgebildet. Die aufrechten Wände sind vorzugsweise durch Schweißen miteinander verbunden.

Nach einer Weiterbildung der Erfindung ist der Dekorationsgegenstand als ein Karosserieteil eines Fahrzeugs, insbesondere als ein Kotflügelteil ausgebildet. Hierdurch lässt sich auf einfache Weise eine Dekoration des Fahrzeugs ermöglichten, wobei lediglich abnehmbare Karosserieteile nachbearbeitet werden zur Erstellung des Dekorationsgegenstandes.

Nach einer Weiterbildung der Erfindung ist eine Ausnehmung des Karosserieteils mit einem Gitter abgedeckt, so dass zum einen ein dekorativer Hintergrund geschaffen wird und zum anderen eine Verletzungsgefahr hinsichtlich des Einklemmens von Fingern vermieden wird.

Nach einer Weiterbildung der Erfindung ist in der Ausnehmung des Karosserieteils ein Leuchtelement integriert, so dass die Ausnehmung bzw. der Dekorationsgegenstand hinterleuchtet ist und damit das optische Erscheinungsbild verändert bzw. verbessert werden kann.

Nach einer Weiterbildung der Erfindung kann das Leuchtelement an der Ausnehmung des Karosserieteils auch so positioniert sein, dass es die Funktion eines Seitenmarkierungslichtes oder eines Blinklichtes hat.

Ausführungsbeispiele der Erfindung werden nachfolgend anhand der Zeichnungen näher erläutert.

Es zeigen:
- Figur 1: eine Vorderansicht von zwei gleichartig, jeweils mit einem Dekorationsmuster nach einer ersten Ausführungsform versehenen ausgebildeten Zuschnitten für einen Blumentopf als Dekorationsgegenstand,
- Figur 2: eine Vorderansicht von zwei gleichen Zuschnitten, die jeweils mit einem Dekorationsmuster nach einer zweiten Ausführungsform ausgebildet sind zur Bildung des Dekorationsgegenstandes,

- Figur 3: eine Vorderansicht eines als Gitterzaun ausgebildeten Dekorationsgegenstandes mit einer Mehrzahl von Gittersegmenten und einem Dekorationszuschnitt,
- Figur 4: eine Seitenansicht eines Fahrzeugs mit einem in einem Kotflügel integrierten Dekorationsgegenstand,
- Figur 5: eine vergrößerte Darstellung des Kotflügelteils gemäß Figur 4 und
- Figur 6: eine Draufsicht auf einen zweidimensionalen Dekorationszuschnitt für den Kotflügel eines Fahrzeugs.

Ein Dekorationsgegenstand 1 kann beispielsweise als Blumentopf ausgebildet sein, der vier aufrechte Wände 2 und eine nicht dargestellte Bodenwand aufweist. Die aufrechten Wände 2 sind an ihren Randseiten 3 durch Verschweißen mit den benachbarten aufrechten Wänden 2 bzw. der Bodenwand verbunden.

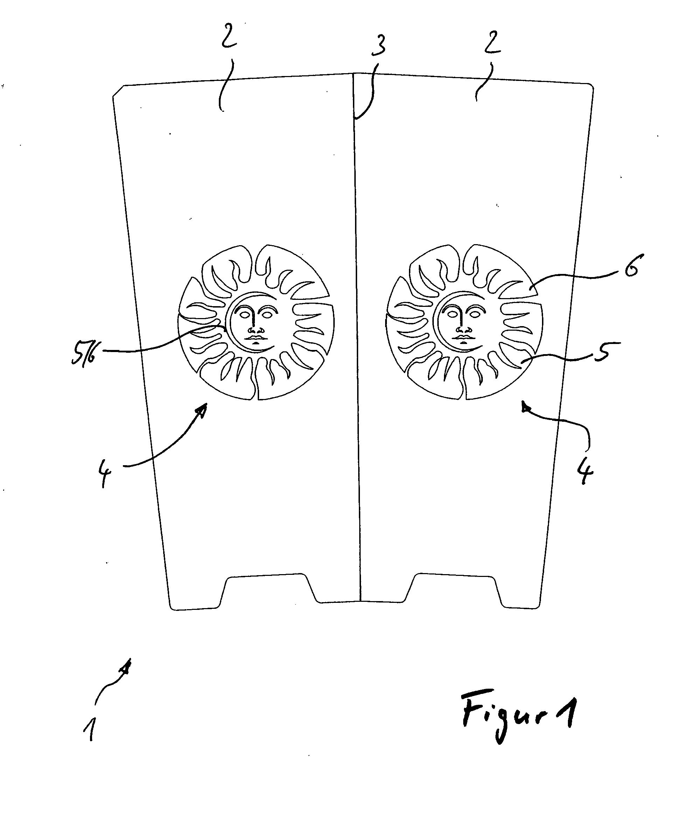

Nach einer ersten Ausführungsform gemäß Figur 1 sind die aufrechten Wände 2 gleichartig ausgebildet und weisen jeweils ein Dekorationsmuster 4 auf. Das Dekorationsmuster 4 ist als ein Sonnenmuster 4 ausgebildet (Sonnensymbol). Das Sonnenmuster 4 erstreckt sich flächig in einem mittleren Bereich der aufrechten Wand 2. Das Sonnenmuster 4 ist gebildet aus einer Mehrzahl von zweidimensionalen Ausschnitten 5, die durch Laserschneiden in die als ein Blechzuschnitt bereitgestellte Wand 2 gebildet sind. Die Ausschnitte 5 sind Ausnehmungen bzw. linienförmige Lochungen, die sich geradlinig oder bogenförmige mit einem vorgegebenen Krümmungsradius erstrecken. Vorzugsweise sind die linienförmigen Ausschnitte 5 geschlossen ausgebildet, so dass Aussparungen 6 gebildet sind.

Die Herstellung des Dekorationsgegenstandes erfolgt folgendermaßen. Es werden eine Mehrzahl von flächigen ebenen Zuschnitten 2 aus einem Metallmaterial (Stahlmaterial) bereitgestellt. Mittels Laserschneiden wird das Dekorationsmuster 4 auf den gleich ausgebildeten Zuschnitten 2 appliziert. Nachfolgend werden die vier Zuschnitte 2 an Ihren Randseiten 3 durch Schweißen miteinander und mit der Bodenwand verbunden.

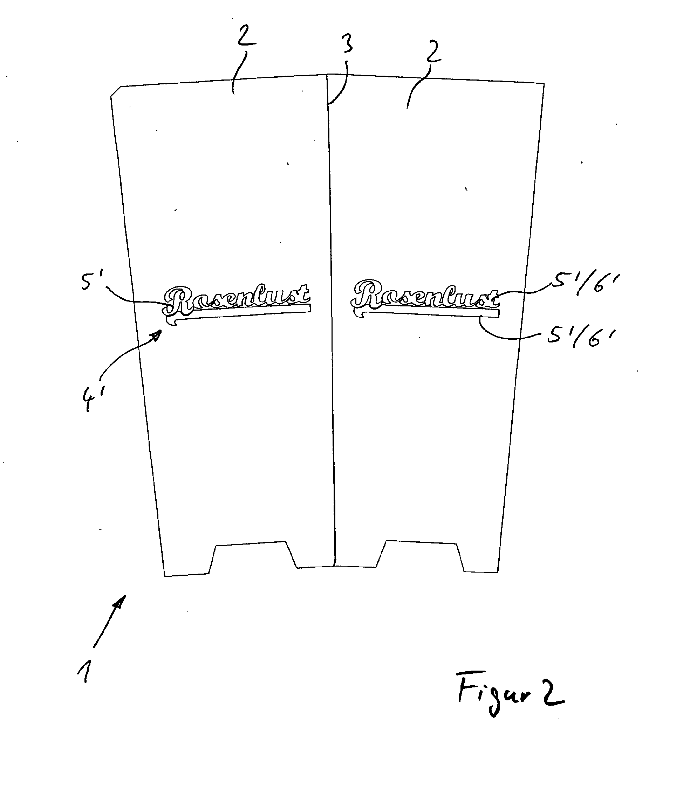

Nach einer zweiten Ausführungsform gemäß Figur 2 kann ein Dekorationsmuster 4' auch als eine Beschriftung ausgebildet sein. Die Beschriftung 4' wird in gleicher Weise mittels Laserschneiden unter Bildung von Ausschnitten 5' bzw. Aussparungen 6' erstellt.

Die Wände 2 des Dekorationsgegenstandes 1 können auf einer Innenseite zumindest im Bereich des Dekorationsmusters 4 mit einer opaken oder farbigen Platte verbunden sein, so dass das Dekorationsmuster sich farblich von der Farbe der aufrechten Wand 2 abhebt. Beispielsweise kann die aufrechte Wand 2 dunkelfarbig und die Kunststoffplatte weiß ausgebildet sein, so dass ein Kontrast gebildet wird, der zur optischen Hervorhebung des Dekorationsmusters 4, 4' beiträgt.

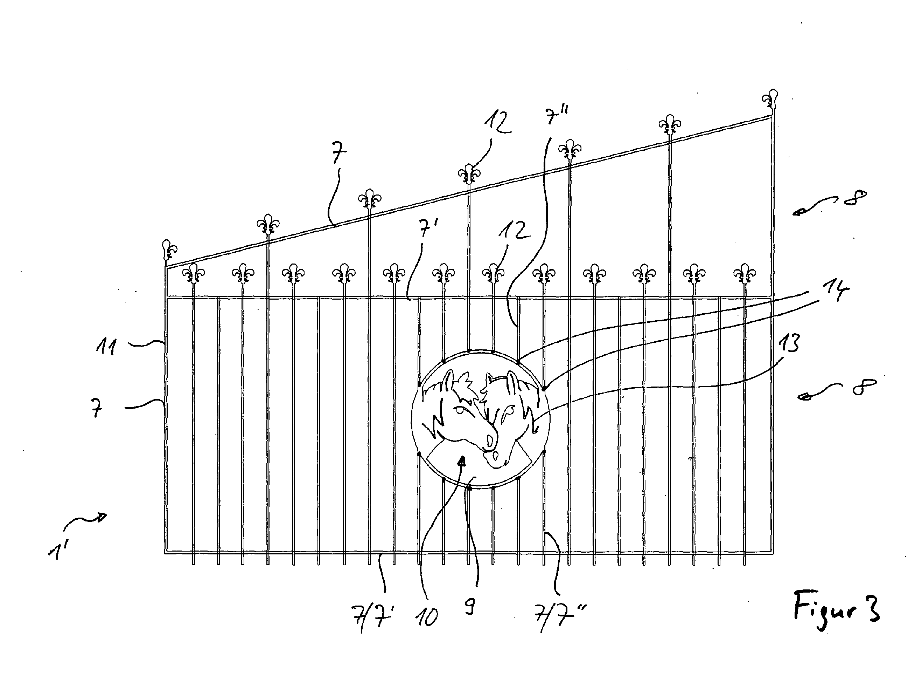

Nach einer weiteren Ausführungsform der Erfindung gemäß Figur 3 kann ein Dekorationsgegenstand 1' als ein Gitterzaun ausgebildet sein, der aus einer Mehrzahl von Gitterstäben 7 zur Bildung von Gittersegmenten 8 einerseits und einem Zuschnitt 9 mit einem Dekorationsmuster 10 andererseits besteht.

Die Gitterstäbe 7 sind im Querschnitt rechteckförmig oder quadratisch ausgebildet, wobei waagerechte Gitterstäbe 7' mit einem randseitigen Gitterstab 11 formschlüssig mittels einer Nut-Feder-Verbindung unter stumpfer bzw. senkrechter Anlage an demselben verbunden sind. Der randseitige Gitterstab 11 weist eine der Kontur des waagerechten Gitterstabs 7' entsprechende Ausnehmung auf, in die der waagerecht verlaufende Gitterstab 7' eingreifen kann. Vorzugsweise wird die formschlüssige Verbindung durch eine Schweißnaht an den Grenzlinien zwischen den beiden Stäben 7' und 11 gesichert.

Die senkrechten Gitterstäbe 7" weisen an ihrer Oberseite Verzierungen 12 auf. Sie sind durch Lochungen der waagerechten Gitterstäbe 7' geführt. In einem mittleren Bereich des Gitterzauns 1' ist der kreisförmige Zuschnitt 9 vorgesehen, der als Dekorationsmuster 10 die Darstellung von zwei Pferdeköpfen aufweist. Das Dekorationsmuster 10 ist durch linienförmige Ausschnitte 13 entsprechend der Kontur eines Pferdekopfes gebildet. Der Zuschnitt 9 ist randseitig über Verschweißpunkte 14 durch Verschweißen mit den benachbarten Gitterstäben 7" verbunden.

Die Zuschnitte 2, 9 können aus einem Blech-, Edelstahlmaterial bestehen.

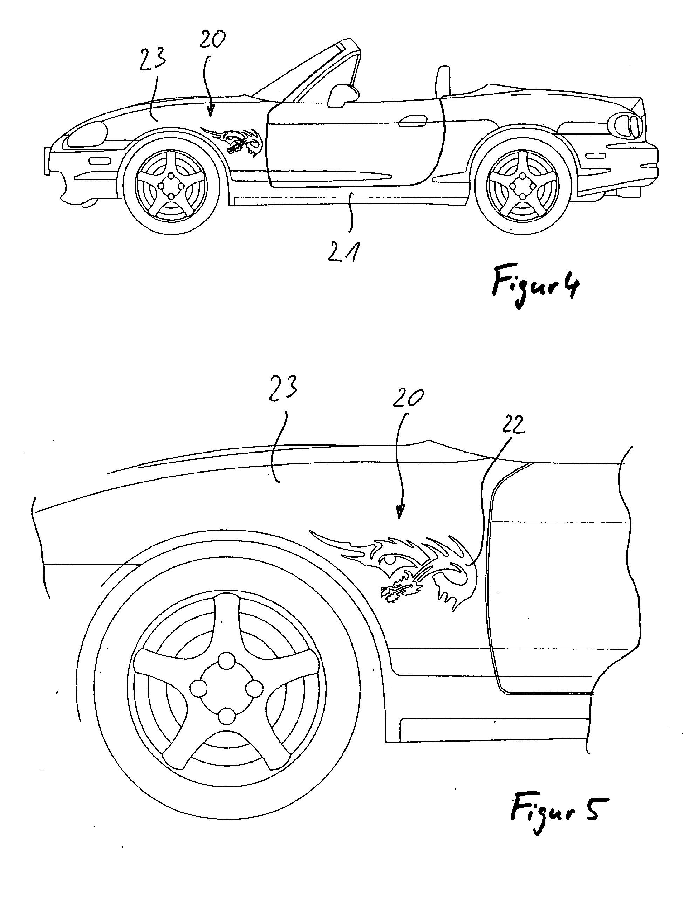

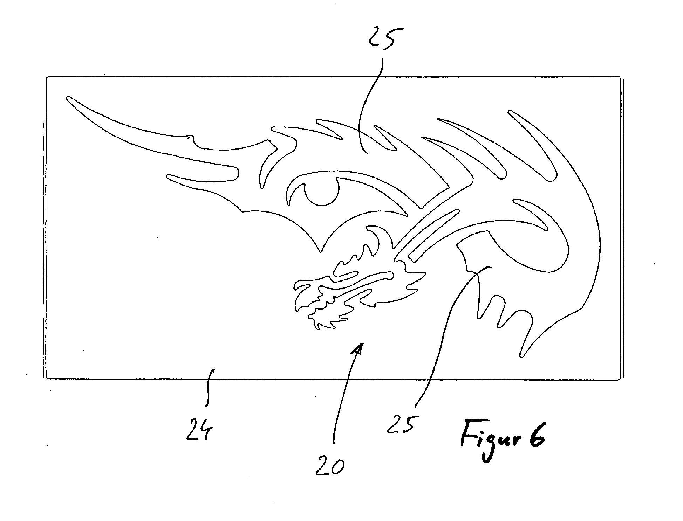

Nach einer weiteren Ausführungsform der Erfindung ist ein Dekorationsgegenstand 20 als ein Karosseriebauteil bzw. Kotflügelteil eines Fahrzeugs 21 ausgebildet. Wie aus den Figuren 4 bis 6 ersichtlich ist, kann der Dekorationsgegenstand 20 die Form eines Drachenkopfes aufweisen, wobei in dem Kotflügelteil 20 entsprechende Ausnehmungen 22 durch Laserschneiden hergestellt sind.

Nach einer ersten Variante kann die dekorative Ausnehmung 22 durch Laserschneiden eines dreidimensionalen bereits fertig gestellten Kotflügelteils 23 erfolgen. Hierbei hat das Kotflügelteil 23 bereits seine vorgesehene bauchige Form. Zur Erstellung des Dekorationsgegenstandes 20 bzw. der Ausnehmung 22 kann das Kotflügelteil 23 von dem Fahrzeug 21 demontiert und dann einer entsprechenden Laserbearbeitungsmaschine zugeführt werden. Nachfolgend wird die Ausnehmung mit einem Gitter versehen, das auf einer Rückseite des Kotflügelteils 23 vorzugsweise durch Schweißen befestigt ist. Das Gitter kann in einer solchen Farbe vorliegen, dass das optische Erscheinungsbild des Dekorationsgegenstandes 20 gefördert wird. Im Ausführungsbeispiel kann die Farbe des nicht dargestellten Gitters beispielsweise grün oder rot sein. Vorteilhaft wird durch das Vorsehen des Gitters verhindert, dass eine Verletzungsgefahr besteht beispielsweise durch Einklemmen eines Fingers in einer zu großen Öffnung der Ausnehmung 22. Das Gitter kann vorzugsweise als ein Edelstahlgitter bzw. als ein Grill ausgebildet sein.

Nach einer weiteren Variante der Erfindung kann statt des Gitters oder zusätzlich der Ausnehmung 22 ein Leuchtelement zugeordnet sein, so dass der Dekorationsgegenstand 20 in einer vorgegebenen Farbe hinterleuchtet wird. Hierdurch kann das Erscheinungsbild des Dekorationsgegenstandes 20 weiter verbessert werden.

Nach einer alternativen Ausführungsform kann das Leuchtelement auch derart ausgebildet sein, dass der Dekorationsgegenstand 20 die Funktion eines Seitenmarkierungslichtes oder eines Blinklichtes zukommt.

Vorzugsweise ist das Leuchtelement als eine Leuchtdiode (LED-Leuchtelement) ausgebildet. Vorzugsweise ist an dem Leuchtelement eine Drahtverbindung angeordnet, so dass nach Montieren des Kotflügelteils 23 an dem Fahrzeug 21 eine Kontaktierung zu der elektrischen Spannungsversorgung des Fahrzeugs 21 hergestellt werden kann.

Bevor das dreidimensionale Kotflügelteil 23 an dem Fahrzeug 21 montiert wird, wird es in einer entsprechenden Farbe, die vorzugsweise der Farbe der weiteren Karosserieaußenteile wie Motorhabe entspricht lackiert.

Nach einer alternativen Ausführungsform kann ein zweidimensionaler Dekorationszuschnitt 24 vorgesehen sein, der aus einem Stahlmaterial gefertigt ist. Durch Laserschneiden werden die entsprechenden Ausnehmungen 25 zur Bildung des Dekorationsgegenstandes 20 hergestellt. Nach Lackierung des Dekorationszuschnitts 24 wird derselbe als Einschweißblech in das vorhandene und noch nicht mit einem Dekorationsgegenstand 20 versehene Kotflügelteil eines Fahrzeugs integriert. Es versteht sich, dass der so hergestellte zweidimensionale Dekorationsgegenstand 24 ausschließlich in Bereichen von Karosserieteilen eingeschweißt werden kann, die eben ausgebildet sind.

Nach einer alternativen Ausführungsform kann der Dekorationsgegenstand 24 auch an einem Kühlergrill des Fahrzeugs 21 oder anderen Bereichen der Karosserieaußenhaut angeordnet sein.

Es versteht sich, dass die Gitterabdeckung bzw. die Hinterleuchtung auch für die Ausnehmungen der Dekorationsgegenstände 1, 1' vorgesehen sein können.

## Patentansprüche

1. Dekorationsgegenstand (1, 1') aus einem Metallmaterial, der über eine Mehrzahl von Ausnehmungen verfügt zur Bildung eines Dekorationsmusters (4, 4', 10), **dadurch gekennzeichnet, dass** der Dekorationsgegenstand (1, 1') mindestens einen Zuschnitt (2, 9) aufweist, dass das Dekorationsmuster (4, 4', 10) durch Laserschneiden in dem Zuschnitt (2, 9) gebildet ist und dass der Zuschnitt (2, 9) mit weiteren Zuschnitten (2, 9) und/oder weiteren Bauteilen (7, 7', 7'', 8) zur Bildung des Dekorationsgegenstandes (1, 1') fest verbunden ist.

2. Dekorationsgegenstand nach Anspruch 1, **dadurch gekennzeichnet, dass** sich das Dekorationsmuster (4, 4', 10) flächig in der Ebene des Zuschnitts (2, 9) erstreckt.

3. Dekorationsgegenstand nach Anspruch 1 oder 2, **dadurch gekennzeichnet, dass** das Dekorationsmuster (4, 4', 10) durch eine Mehrzahl von zweidimensionalen Ausschnitten (5, 5', 13) gebildet ist und dass das Dekorationsmuster (4, 4', 10) ein Ornament und/oder ein Symbol und/oder eine Beschriftung umfasst.

4. Dekorationsgegenstand nach einem der Ansprüche 1 bis 3, **dadurch gekennzeichnet, dass** der mit dem Dekorationsmuster (4, 4', 10) versehene Zuschnitt (2, 9) durch Schweißen mit einem weiteren Zuschnitt (2, 9) und/oder dem Bauteil (7, 7', 7'', 8) verbunden ist.

5. Dekorationsgegenstand nach einem der Ansprüche 1 bis 4, **dadurch gekennzeichnet, dass** der Zuschnitt (2, 9) aus einem Blechmaterial, insbesondere aus einem Edelstahlblechmaterial, gebildet ist.

6. Dekorationsgegenstand nach einem der Ansprüche 1 bis 5, **dadurch gekennzeichnet, dass** der Dekorationsgegenstand (1') als ein Gitterzaun ausgebildet ist, wobei Gittersegmenten (8) des Gitterzauns formschlüssig miteinander verbunden sind.

7. Dekorationsgegenstand nach Anspruch 6, **dadurch gekennzeichnet, dass** stumpf zueinander angeordnete Gitterstäbe (7', 7'') mittels einer Feder-Nut-Verbindung miteinander verbunden sind.

8. Dekorationsgegenstand nach einem der Ansprüche 1 bis 5, **dadurch gekennzeichnet, dass** der Dekorationsgegenstand (1) als ein Blumentopf ausgebildet ist mit aufrechten Wänden (2), von denen mindestens eine Wand (2) das Dekorationsmuster (4, 4') aufweist.

9. Dekorationsgegenstand nach einem der Ansprüche 1 bis 5, **dadurch gekennzeichnet, dass** der Dekorationsgegenstand (20, 24) in einem Karosserieteil (23) eines Fahrzeugs (21), insbesondere in einem Kotflügelteil (23), integriert angeordnet ist.

10. Dekorationsgegenstand nach einem der Ansprüche 1 bis 9, **dadurch gekennzeichnet, dass** die Ausnehmung des Dekorationsgegenstandes (1, 1', 20, 24) mit einem Gitter abgedeckt ist.

11. Dekorationsgegenstand nach Anspruch 9 oder 10, **dadurch gekennzeichnet, dass** die Ausnehmung (22) des in ein Karosserieteil (23) integrierten Dekorationsgegenstandes (20) mit mindestens einem Leuchtelement hinterleuchtet ist.

12. Dekorationsgegenstand nach Anspruch 11, **dadurch gekennzeichnet, dass** das Leuchtelement als ein Seitenmarkierungslicht oder als ein Blinklicht ausgebildet ist.

13. Dekorationsgegenstand nach einem der Ansprüche 9 bis 12, **dadurch gekennzeichnet, dass** der Dekorationsgegenstand als ein zweidimensionaler Dekorationszuschnitt (24) ausgebildet ist, der in das vorhandene Karosserieteil des Fahrzeugs (21) eingeschweißt ist.
